# EUROPÄISCHE PATENTSCHRIFT

(11) **EP 1 050 432 B1**
(45) Veröffentlichungstag und Bekanntmachung des Hinweises auf die Patenterteilung: **01.09.2004**
(21) Anmeldenummer: 00109447.3
(22) Anmeldetag: 03.05.2000
(51) Int. Cl.: B60Q 1/04, B60Q 1/26

(54) **Anordnung zum Befestigen einer Fahrzeugleuchte**
Fixation device for vehicle light
Dispositif de fixation pour feux de véhicule

(30) Priorität: 05.05.1999 DE 19920703
(43) Veröffentlichungstag der Anmeldung: 08.11.2000
(73) Patentinhaber: FER Fahrzeugelektrik GmbH, 99819 Eisenach (DE)
(72) Erfinder: Deichmüller, Horst, 99817 Eisenach (DE)
(74) Vertreter: Strasser, Wolfgang, Dipl.-Phys.

(56) Entgegenhaltungen:
- EP-A- 0 751 040
- EP-A- 0 838 369
- EP-A- 0 838 370
- DE-C- 19 511 137

## Beschreibung

Die Erfindung betrifft eine Anordnung zum Befestigen einer Fahrzeugleuchte der im Oberbegriff von Anspruch 1 genannten bzw. aus der DE 195 11137 bekannten Art.

Fahrzeugleuchten werden an der Karosserie eines Fahrzeuges im allgemeinen so befestigt, daß ihre Befestigungselemente von außen her nicht sichtbar sind und daher mit innenliegenden Elementen der Karosserie im Eingriff stehen müssen. In vielen Anwendungsfällen ist es dabei wichtig, daß es zu einer Dichtwirkung zwischen den über die Karosserieöffnung überstehenden Teilen der Fahrzeugleuchte und den Karosserieelementen kommt, an denen sie anliegen, damit keine Feuchtigkeit an der Fahrzeugleuchte vorbei durch die Karosserieöffnung in das Karosserieinnere eindringen kann. Zur Sicherstellung einer ausreichenden Dichtigkeit ist es daher erforderlich, die über die Karosserieöffnung überstehenden Teile der Fahrzeugleuchte mit einem gewissen, von außen nach innen gerichteten Anpreßdruck gegen die Karosserie anzudrücken.

Zu diesem Zweck ist es bekannt, an der Rückseite des Leuchtengehäuses eine oder mehrere Zugfedem zu befestigen, deren von der Fahrzeugleuchte entfernt liegende Enden über geeignete Halte- oder Rastelemente mit hinter der Karosserieöffnung liegenden Karosserieteilen so in Eingriff gebracht werden, daß die Federanordnung gespannt wird und somit die gewünschte Zugwirkung dauerhaft auf das Leuchtengehäuse ausübt.

Voraussetzung für eine derartige Montageart ist, daß der hinter der Karosserieöffnung liegende Karosserieinnenraum auch dann noch zugänglich ist, wenn die Fahrzeugleuchte in die Karosserieöffnung eingesetzt worden ist, weil das Spannen der Zugfederanordnung und das Ineingriffbringen des freien Endes einer jeden Zugfeder mit dem tieferliegenden Karosserieteil von Hand bzw. mit Hilfe eines handbetätigbaren Werkzeuges durchgeführt werden muß.

Aus der EP 0 838 370 ist eine Vorrichtung zur Befestigung einer Leuchte oder eines Scheinwerfers in einer Karosserieöffnung bekannt, bei der anstelle einer Zug- eine Druckfeder verwendet wird, deren Abstützflächen in Richtung der Kraftwirkung der Feder so vertauscht angeordnet sind, daß diese Feder im gespannten Zustand ebenfalls eine die Fahrzeugleuchte von außen nach innen drückende Kraftwirkung ausübt. Bei dieser bekannten Anordnung wird nicht das freie Ende der Feder selbst an einer tieferliegenden Karosseriestruktur verhakt. Vielmehr ist die Feder zwischen einem am Leuchtengehäuse befestigten Ansatzstück und einem an diesem Ansatzstück in Längsrichtung der Feder verschieblich gelagerten Gleitstück eingesetzt, das an seinem nach innen vorspringenden Ende eine Hakenanordnung aufweist, die an einem weiter innen liegenden Karosserieelement eingehakt werden kann.

Auch bei dieser bekannten Anordnung ist es erforderlich, daß der Karosserieinnenraum im Bereich der zu montierenden Leuchte auch dann noch zugänglich ist, wenn die Leuchte in ihre Karosserieöffnung eingesetzt ist, weil erst danach die Federanordnung gespannt und das Gleitelement an der innenliegenden Karosseriestruktur eingehakt werden kann.

Nachteilig an diesen bekannten Anordnungen ist es, daß es während der Fahrzeugendmontage erforderlich ist, zum Einbau dieser Leuchten von Hand oder über ein von Hand zu betätigendes Werkzeug eine vergleichsweise hohe Spannkraft zum Einhängen der Feder aufzubringen ist und däß immer für eine zusätzliche Zugangsmöglichkeit zu dem innenliegenden Karosseriebereich gesorgt werden muß, an welchem die Federanordnung bzw. das Gleitelement verhakt werden soll. Da diese zusätzliche Zugangsmöglichkeit oft nur aus einer kleinen Öffnung besteht, die eine optische Überprüfung der Montagevorgänge nicht ermöglicht, entsteht eine sehr ungünstige Einbausituation, die zu Montagefehlern führen kann, die nicht erkannt werden.

Somit liegt der Erfindung die Aufgabe zugrunde, eine Befestigungsanordnung der im Oberbegriff des Anspruchs 1 genannten Art so weiterzubilden, daß entsprechende Fahrzeugleuchten ohne das Aufbringen einer mechanischen Spannkraft am Montageort völlig problemlos auch dann montiert werden können, wenn der hinter der Karosserieöffnung liegende Karosserieinnenraum ausschließlich durch die Karosserieöffnung zugänglich ist, in welche die Leuchte eingesetzt wird.

Zur Lösung dieser Aufgabe sieht die Erfindung die im Anspruch 1 niedergelegten Merkmale vor.

Durch die erfindungsgemäße Arretiereinrichtung ist es möglich, die Federanordnung bereits bei Herstellung der Leuchte und nicht erst bei ihrer Montage am Kraftfahrzeug zu spannen. Dieser Spannvorgang kann in einem Zustand erfolgen, in welchem die Rückseite des Leuchtengehäuses frei zugänglich ist, so daß eine weitgehende oder sogar völlige Automatisierung möglich ist.

Die Feder, bei der es sich wahlweise um eine Druck- oder eine Zugfeder handeln kann, wird bei diesem bei der Fertigung der Leuchte erfolgenden Spannvorgang stärker gespannt, als es im eingebauten Zustand erforderlich ist, um das Leuchtengehäuse mit der gewünschten Kraft gegen seinen Sitz zu pressen. Dadurch, daß die die Feder in ihrem stark gespannten Zustand haltende Arretiervorrichtung beim Einführen des Leuchtengehäuses in die Karosserieöffnung automatisch entriegelt wird, kommt es zu einer teilweisen Entspannung der Federanordnung, so daß sich das Gleitelement über einen kurzen Hubweg zu der Karosserieöffnung, durch welche die Fahrzeugleuchte eingesetzt wird, hin bewegt. Dabei treten die am freien Ende des Gleitelementes vorgesehenen Befestigungsmittel mit einem tieferliegenden Karosserieelement in Eingriff, so daß das Gleitelement fest an der Karosserie verankert wird und sich unter der nach wie vor wirksamen Spannung der Federanordnung nicht weiter zum Leuchtengehäuse hin bewegen kann. Statt dessen wird nunmehr das Leuchtengehäuse zu dem fest mit der Karosserie verbundenen Gleitelement hin gezogen, so daß seine außen über die Karosserieöffnung vorstehenden Teile von außen her gegen die Karosserie gedrückt werden. Die dabei vom Gleitelement und dem Leuchtengehäuse durchlaufenen Wege sind so gering, daß die im Vormontagezustand stark "überspannte" Federanordnung nach wie vor in ausreichendem Maße gespannt bleibt, um eine permamente Kraft auszuüben, durch die das Leuchtengehäuse an seinem Platz in der Karosserieöffnung so gehalten wird, daß in Verbindung mit geeigneten Dichtmitteln ein wasserdichter Verschluß der Karosserieöffnung gewährleistet ist.

Irgendwelche Werkzeuge sind für diese Art der Montage nicht erforderlich. Auch ist es nicht erforderlich, daß der Karosserieinnenraum, in welchem sich das Gegenlager für die am Gleitelement vorgesehenen Befestigungsmittel befindet, auf andere Weise als durch die Karosserieöffnung zugänglich ist, in weiche die Fahrzeugleuchte eingesetzt wird.

Bei einer besonders bevorzugten Ausführungsform ist das Gleitelement nicht am Leuchtengehäuse unmittelbar sondern an einem Ansatzstück verschiebbar gelagert, das mit dem Leuchtengehäuse zumindest so verbunden ist, daß es die von der Federanordnung im eingebauten Zustand ausgeübte Kraft auf das Leuchtengehäuse derart übertragen kann, daß zumindest eine Komponente dieser Kraft senkrecht zur Ebene der Karosserieöffnung wirkt.

Vorteilhafter Weise können an den Befestigungsmitteln und/oder dem Gleitelement und/oder dem Ansatzstück Leit- und Führungsflächen vorgesehen sein, die beim Einsetzen der Fahrzeugleuchte die Befestigungsmittel automatisch an die Halteeinrichtung im Innenraum der Karosserie so heranführen, daß es zu einem sicheren lneingrifftreten kommt, wenn die Arretiereinrichtung entriegelt wird.

Vorzugsweise erfolgt diese Entriegelung mit Hilfe eines Nockens, der dann, wenn die gesamte Anordnung tief genug in den Karosserieinnenraum eingeführt worden ist, mit einem in diesem Innenraum vorgesehenen Karosserieelement so in Wechselwirkung tritt, daß die Arretiereinrichtung geöffnet wird und die Fedeanordnung sich teilweise entspannen kann.

Diese und andere vorteilhafte Ausgestaltungen der erfindungsgemäßen Anordnung sind in den Unteransprüchen niedergelegt.

Die Erfindung wird im folgenden anhand eines Ausführungsbeispiels unter Bezugnahme auf die Zeichnung beschrieben; in dieser zeigen:
- Fig. 1: eine teilweise geschnittene Seitenansicht einer erfindungsgemäßen Anordnung zum Befestigen einer Fahrzeugleuchte während deren Einbau in eine Karosserieöffnung und
- Fig. 2: eine Draufsicht auf die Vorrichtung aus Fig. 1.

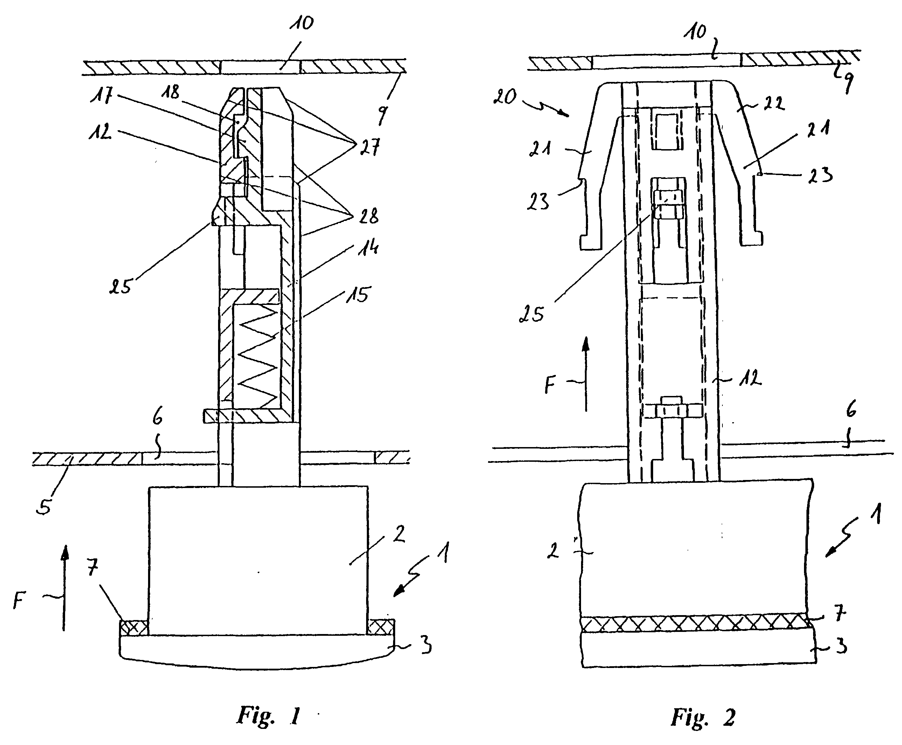

In den Fig. 1 und 2 ist jeweils eine Fahrzeugleuchte 1 mit einem Gehäuse 2 und einer Licht-Streuscheibe 3 dargestellt, die in eine in einem Karosserieblech 5 vorgesehen Karosserieöffnung 6 von außen her, d.h. in Richtung des Pfeiles F eingesetzt werden soll. Die Streuscheibe 3 ist größer dimensioniert als die Karosserieöffnung 6, so daß die Fahrzeugleuchte 1 nicht nach hinten durchrutschen kann. In dem Bereich, in welchem die Rückseite der Streuscheibe 3 im eingebauten Zustand am Karosserieblech 5 anliegt, ist eine Dichtung 7 vorgesehen, die für einen wasserdichten Abschluß der Karosserieöffnung 6 sorgt.

Im Inneren der Karosserie ist eine Halteeinrichtung vorgesehen, die von einem zweiten Karosserieblech 9 und einer in diesem vorgesehenen Halteöffnung 10 gebildet wird.

Auf der der Licht-Streuscheibe 3 gegenüberliegenden Seite ist am Leuchtengehäuse 2 ein Ansatzstück 12 derart fest montiert, daß es vom Leuchtengehäuse 2 nach hinten, d.h. im eingebauten Zustand zum zweiten Karosserieblech 9 hin absteht.

An dem länglichen Ansatzstück 12 ist ein ebenfalls längliches Gleitelement 14 in Längsrichtung, d.h. in Richtung des Pfeiles F verschieblich gelagert, wobei zwischen dem Ansatzstück 12 und dem Gleitelement 14 eine Kompressionsfeder 15 so angeordnet ist, daß sie das Gleitelement 14 zum Leuchtengehäuse 2 hin vorspannt.

Allerdings kann das Gleitelement 14 dieser Vorspannkraft nicht frei folgen, weil es durch eine Arretiereinrichtung, die von einer am Gleitelement vorgesehenen Rastnase 17 und einer am Ansatzstück 12 vorgesehenen Vertiefung 18 zurückgehalten wird, in welche die Rastnase 17 in dem in Fig. 1 gezeigten Vor-Montagezustand eingreift.

An seinem in Einbaurichtung hinteren Ende trägt das Gleitelement 14 ein mit ihm fest verbundenes Befestigungsmittel 20, das zwei Federschenkel 21 umfaßt, die beim Einführen der Fahrzeugleuchte 1 in die Karosserieöffnung 6 zusammengedrückt werden, wenn die schrägen Führungsflächen 22 in die Halteöffnung 10 eintauchen.

Die Länge der gesamten Befestigungseinrichtung ist so bemessen, daß dann, wenn die Dichtung 7 an der in den Figuren unten liegenden Vorderseite des Karosserieblech 5 zur Anlage kommt, die an den Federschenkeln 21 ausgebildeten Schultern 23 mit einem gewissen Abstand hinter der Rückseite des Karosseriebleches 9 liegen.

Bei Erreichen dieser Stellung tritt weiterhin ein am Gleitelement 14 vorgesehener Nocken 25 mit dem Rand der Halteöffnung 10 in Eingriff, wodurch die Rastnase 17 aus der Vertiefung 18 ausgelenkt wird, so daß das Gleitelement 14 unter dem Druck der gespannten Kompressionsfeder 15 in Gegenrichtung zum Pfeil F sich nach vorne bewegen kann, bis die Schultern 23 der Federschenkel 21 an der Rückseite des Karosseriebleches 9 zur Anlage kommen. In diesem Zustand ist die Kompressionsfeder 15 nicht völlig entspannt, sondern übt weiterhin eine voreingestellte Druckkraft aus, durch welche das Leuchtengehäuse 2 in Richtung des Pfeiles F gegen ihren vom Rand der Karosserieöffnung 6 gebildeten Sitz gepreßt wird.

Bei der Herstellung der Leuchte wird nach Einlegen der Druckfeder zwischen das Ansatzstück 12 und das Gleitelement 14 letzteres zum Spannen der Druckfeder 15 so weit verschoben, bis die Rastnase 17 in die Vertiefung 18 einrastet und dadurch das Gleitelement 14 in dieser Vor-Montagestellung arretiert.

Beim Einsetzen der Fahrzeugleuchte 1 in die Karosserieöffnung 6 erfolgt dann zunächst über die Einführschrägen 27 ein Suchen der Halteöffnung 10 im hinteren Karosserieblech 9. Beim weiteren, durch die Führungsflächen 28 unterstützten Verschieben kommt es dann zu dem oben beschriebenen Zusammendrükken der Federschenkel 21 sowie dem Verrasten der Schultern 23 hinter dem zweiten Karosserieblech 9.

Aufgrund des hierauf folgenden Lösens der von der Rastnase 17 und der Vertiefung 18 gebildeten Arretiereinrichtung durch das Ineingrifftreten des Nockens 25 mit dem Rand der Halteöffnung 10 kommt es dann zu dem gewünschten Einspannen der Fahrzeugleuchte 1 zwischen dem vorderen Karosserieblech 5 und dem zweiten Karosserieblech 9, ohne daß hierfür ein Werkzeug benötigt wird oder der Raum hinter dem Karosserieblech 5 von irgend einer Seite her zugänglich sein müßte.

Je nach Leuchtenabmessung können nicht nur eine sondern auch mehrere derartige Befestigungseinrichtungen je Leuchte zum Einsatz kommen.

Während die Fügerichtung der Fahrzeugleuchte 1 und die Verschieberichtung F des Gleitelementes 14 annähernd übereinstimmen sollten, kann die Hauptabstrahlrichtung der Leuchte von dieser Richtung abweichen.

Anstelle der Druckfeder 15 kann auch eine Zugfeder zum Einsatz kommen, wobei dann die Abstützflächen für diese Feder am Ansatzstück 12 einerseits und am Gleitelement 14 andererseits in Bewegungsrichtung des Gleitstückes 14 gegenüber der gezeigten Ausführungsform vertauscht angeordnet und die Federenden eingehängt werden müssen..

In Abwandlung der dargestellten Ausführungsform kann das Ansatzstück 12 auch mit einem begrenzten Drehwinkel gelenkig mit dem Gehäuse 2 der Leuchte 1 verbunden sein, um einerseits das Einführen der Leuchte bei ungünstigen Einbauverhältnissen zu erleichtern und andererseits einen Toleranzausgleich zwischen Außen- und Innenblech-Ausrichtung der Leuchte zu ermöglichen.

## Patentansprüche

1. Anordnung zum Befestigen einer Fahrzeugleuchte (1), die von außen her in eine Karosserieöffnung (6) eingesetzt und gegen einen Sitz angedrückt wird, wobei die Anordnung folgende Bestandteile umfaßt:
eine im Inneren der Karosserie mit Abstand von der Karosserieöffnung (6) angeordnete, mit der Karosserie fest verbundene Halteeinrichtung (9, 10),
ein am Leuchtengehäuse (2) beweglich montiertes, bezüglich des Leuchtengehäuses (2) in einer zur Ebene der Karosserieöffnung (6) nicht parallelen Richtung verschiebbares Gleitelement (14), das auf seiner vom Leuchtengehäuse (2) entfernt liegenden Seite Befestigungsmittel (20) aufweist, die mit der Halteeinrichtung (9, 10) der Karosserie in Eingriff bringbar sind, sowie
eine gegen das Gleitelement (14) abgestützte Federanordnung (15), die im eingebauten Zustand gespannt ist, um auf das Leuchtengehäuse (2) eine Kraft auszuüben, welche die Fahrzeugleuchte (1) gegen ihren Sitz drückt,
weiterhin eine Arretiereinrichtung (17, 18) , durch die das Gleitelement (14) bezüglich des Leuchtengehäuses (2) in einer Vor-Montagestellung gehalten wird, in der die Federanordnung (15) stärker gespannt ist, als im fertig eingebauten Zustand, **dadurch gekennzeichnet, daß** die Arretiereinrichtung (17, 18) automatisch lösbar ist, wenn beim Einsetzen der Fahrzeugleuchte (1) die Befestigungsmittel (20) eine Position erreicht haben, aus der heraus sie aufgrund der nach dem Lösen der Arretiereinrichtung (17, 18) eintretenden, teilweisen Entspannung der Federanordnung (15) und der hiermit verbundenen Bewegung des Gleitelements (14) mit der Halteeinrichtung (9, 10) der Karosserie in Eingriff treten können.

2. Befestigungseinrichtung nach Anspruch 1, **dadurch gekennzeichnet, daß** die Befestigungsmittel (20) eine Rastanordnung (21, 23) umfassen, die in eine einen Bestandteil der Halteeinrichtung (9, 10) bildende Halteöffnung (10) einrastet, die in einem hinter der Karosserieöffnung (6) für die Fahrzeugleuchte (1) liegenden Karosserieteil (10) vorgesehen ist.

3. Befestigungseinrichtung nach Anspruch 2, **dadurch gekennzeichnet, daß** die Rastanordnung (21, 23) etwas weiter durch die Halteöffnung (9) vorgeschoben werden kann, als für ihr Einrasten erforderlich ist, und daß die Arretiereinrichtung (17, 18) mit einer Nockenanordnung (25) verbunden ist, die bei diesem weiteren Einschieben mit dem Rand der Halteöffnung (9) der Karosserie in Wechselwirkung tritt, um die Arretiereinrichtung (17, 18) zu lösen.

4. Befestigungseinrichtung nach einem der vorhergehenden Ansprüche, **dadurch gekennzeichnet, daß** an dem Gleitelement (14) Führungsflächen (27, 28) vorgesehen sind, die beim Einsetzen der Fahrzeugleuchte (1) die Befestigungsmittel (20) in die richtige Position bringen.

5. Befestigungseinrichtung nach einem der vorhergehenden Ansprüche, **dadurch gekennzeichnet, daß** das Gleitelement (14) an einem am Leuchtengehäuse (2) montierten Ansatzstück (12) gegen die Kraft der Federanordnung (15) verschieblich gelagert ist und daß die Kraft der Federanordnung (15) über das Ansatzstück (12) auf das Leuchtengehäuse (2) übertragen wird.

6. Befestigungseinrichtung nach Anspruch 4, **dadurch gekennzeichnet, daß** das Ansatzstück (12) am Leuchtengehäuse (2) schwenkbar befestigt ist.

7. Befestigungseinrichtung nach Anspruch 5 oder 6, **dadurch gekennzeichnet, daß** an dem Ansatzstück (12) Führungsflächen (27, 28) vorgesehen sind, die beim Einsetzen der Fahrzeugleuchte (1) die Befestigungsmittel (20) in die richtige Position bringen.

8. Befestigungseinrichtung nach einem der vorhergehenden Ansprüche, **dadurch gekennzeichnet, daß** an einem Leuchtengehäuse mehrere Gleitelemente mit den jeweiligen Befestigungsmitteln vorgesehen sind, von denen jedem eine Halteeinrichtung an der Karosserie zugeordnet ist.

## Claims

1. An arrangement for fixing a vehicle light (1) which is fitted from the outside into an opening (6) in bodywork and pressed against a seat, wherein the arrangement includes the following components:
a holding device (9, 10) which is arranged in the interior of the bodywork at a spacing from the opening (6) therein and which is fixedly connected to the bodywork,
a sliding element (14) which is mounted movably to the light casing (2) and which is displaceable with respect to the light casing (2) in a direction not parallel to the plane of the opening (6) in the bodywork, which sliding element on its side remote from the light casing (2) has fixing means (20) which can be brought into engagement with the holding device (9, 10) of the bodywork, and
a spring arrangement (15) which is supported against the sliding element (14) and which in the installed condition is stressed to apply to the light casing (2) a force which presses the vehicle light (1) against its seat,
and further an arresting device (17, 18) by which the sliding element (14) is held with respect to the light casing (2) in a pre-assembly position in which the spring arrangement (15) is stressed more greatly than in the finally installed condition,
**characterised in that** the arresting device (17, 18) is automatically releasable when upon insertion of the vehicle light (1) the fixing means (20) have reached a position from which they can come into engagement with the holding device (9, 10) of the bodywork by virtue of partial relief of the spring arrangement (15), which occurs after release of the arresting device (17, 18), and the related movement of the sliding element (14).

2. A fixing device according to claim 1 **characterised in that** the fixing means (20) include a latching arrangement (21, 23) latching into a holding opening (10) which forms a component of the holding device (9, 10) and which is provided in a bodywork part (10) disposed behind the opening (6) in the bodywork for the vehicle light (1).

3. A fixing device according to claim 2 **characterised in that** the latching arrangement (21, 23) can be advanced through the holding opening (9) somewhat further than is required for the latching engagement thereof, and that the arresting device (17, 18) is connected to a cam arrangement (25) which upon said further insertion comes into interacting relationship with the edge of the holding opening (9) in the bodywork to release the arresting device (17, 18).

4. A fixing device according to one of the preceding claims **characterised in that** provided on the sliding element (14) are guide surfaces (27, 28) which upon insertion of the vehicle light (1) bring the fixing means (20) into the correct position.

5. A fixing device according to one of the preceding claims **characterised in that** the sliding element (14) is supported displaceably against the force of the spring arrangement (15) on a projection portion (12) mounted to the light casing (2) and that the force of the spring arrangement (15) is transmitted to the light casing (2) by way of the projection portion (12).

6. A fixing device according to claim 4 **characterised in that** the projection portion (12) is fixed pivotably to the light casing (2).

7. A fixing device according to claim 5 or claim 6 **characterised in that** provided on the projection portion (12) are guide surfaces (27, 28) which upon insertion of the vehicle light (1) bring the fixing means (20) into the correct position.

8. A fixing device according to one of the preceding claims **characterised in that** provided on the light casing are a plurality of sliding elements with the respective fixing means, associated with each of which is a holding device on the bodywork.

## Revendications

1. Dispositif pour la fixation d'un phare de véhicule (1), qui est inséré de l'extérieur dans une ouverture de carrosserie (6) et qui pressé sur un siège, ledit dispositif comprenant les éléments constitutifs suivants :
un dispositif de maintien (9, 10) relié fixement à la carrosserie et disposé à l'intérieur de la carrosserie en écart de l'ouverture de carrosserie (6),
un élément coulissant (14) monté de manière mobile sur le boîtier de phare (2) et déplaçable par rapport au boîtier de phare (2) dans une direction qui n'est pas parallèle au plan de l'ouverture de carrosserie (6), ledit élément coulissant (14) comprenant des moyens de fixation (20) sur son côté situé en éloignement du boîtier de phare (2), lesdits moyens de fixation (20) étant aptes à venir en prise avec le dispositif de maintien (9, 10) de la carrosserie, et
un dispositif de ressort (15) en appui sur l'élément coulissant (14), le dispositif de ressort (15) étant contraint dans l'état monté afin d'exercer une force sur le boîtier de phare (2) qui appuie le phare de véhicule (1) sur son siège,
en outre un dispositif de butée (17, 18) par lequel l'élément coulissant (14) est maintenu par rapport au boîtier de phare (2) dans une position de prémontage, dans laquelle le dispositif de ressort (15) est plus fortement comprimé que dans l'état monté final, **caractérisé en ce que** le dispositif de butée (17, 18) est automatiquement libérable lorsque, lors de l'insertion du phare de véhicule (1), les moyens de fixation (20) ont atteint une position à partir de laquelle ils peuvent venir en prise avec le dispositif de maintien (9, 10) de la carrosserie en raison du relâchement partiel du dispositif de ressort (15) survenant après la libération du dispositif de butée (17, 18) et en raison du déplacement associé de l'élément coulissant (14).

2. Dispositif de fixation selon la revendication 1, **caractérisé en ce que** les moyens de fixation (20) comprennent un dispositif d'encliquetage (21, 23) qui s'encliquette dans une ouverture de maintien (10) formant une pièce constitutive du dispositif de maintien (9, 10), ladite ouverture de maintien (10) étant prévue dans une pièce de carrosserie (10) située derrière l'ouverture de carrosserie (6) pour le phare de véhicule (1).

3. Dispositif de fixation selon la revendication 2, **caractérisé en ce que** le dispositif d'encliquetage (21, 23) peut être déplacé davantage à travers l'ouverture de maintien (9) que cela est nécessaire pour son encliquetage, et **en ce que** le dispositif de butée (17, 18) est relié à un dispositif d'ergot (25) qui, lors de ce déplacement supplémentaire interagit avec le bord de l'ouverture de maintien (9) de la carrosserie, afin de libérer le dispositif de butée (17, 18).

4. Dispositif de fixation selon l'une quelconque des revendications précédentes, **caractérisé en ce que** des surfaces de guidage (27, 28) sont prévues au niveau de l'élément coulissant (14), lesdites surfaces de guidage amenant les moyens de fixation (20) dans la bonne position lors de l'insertion du phare de véhicule (1).

5. Dispositif de fixation selon l'une quelconque des revendications précédentes, **caractérisé en ce que** l'élément coulissant (14) est monté de manière mobile sur un appendice (12) monté sur le boîtier de phare (2) contre la force du dispositif de ressort (15) et **en ce que** la force du dispositif de ressort (15) est transmise au boîtier de phare (2) par l'intermédiaire de l'appendice (12).

6. Dispositif de fixation selon la revendication 4, **caractérisé en ce que** l'appendice (12) est fixé de manière pivotante au boîtier de phare (2).

7. Dispositif de fixation selon la revendication 5 ou 6, **caractérisé en ce que** des surfaces de guidage (27, 28) sont prévues au niveau de l'appendice (12), lesdites surfaces de guidage amenant les moyens de fixation (20) dans la bonne position lors de l'insertion du phare de véhicule (1).

8. Dispositif de fixation selon l'une quelconque des revendications précédentes, **caractérisé en ce que** plusieurs éléments coulissants avec des moyens de fixation respectifs sont prévus au niveau d'un boîtier de phare, un dispositif de maintien à la carrosserie étant associé à chacun des éléments coulissants.
